Europäisches Patentamt

European Patent Office

Office européen des brevets

(11) Numéro de publication : **0 362 282 B1**

(19)

# FASCICULE DE BREVET EUROPEEN

(12)

(45) Date de publication du fascicule du brevet :
**11.03.92 Bulletin 92/11**

(21) Numéro de dépôt : **88905391.4**

(22) Date de dépôt : **14.06.88**

(86) Numéro de dépôt international :
**PCT/FR88/00307**

(87) Numéro de publication internationale :
**WO 88/10439 29.12.88 Gazette 88/28**

(51) Int. Cl.⁵ : **G02B 6/06**

(54) ANAMORPHOSEUR OPTIQUE ET UN PROCEDE DE FABRICATION.

(30) Priorité : **18.06.87 FR 8708513**

(43) Date de publication de la demande :
**11.04.90 Bulletin 90/15**

(45) Mention de la délivrance du brevet :
**11.03.92 Bulletin 92/11**

(84) Etats contractants désignés :
**AT BE CH DE FR GB IT LI LU NL SE**

(56) Documents cités :
**EP-A- 0 078 733
EP-A- 0 112 223
DE-C- 3 010 005
FR-A- 2 170 079
US-A- 4 026 693
US-A- 4 076 378
US-A- 4 099 833
US-A- 4 121 206
US-A- 4 331 380
Le Petit Robert, Edition 1981, pp 65, 66**

(73) Titulaire : **SOCIETE D'ETUDES ET DE
RECHERCHES DE L'ECOLE NATIONALE
SUPERIEURE D'ARTS ET METIERS en abrégé
S E R A M
151, Boulevard de l'Hôpital
F-75013 Paris (FR)**

(72) Inventeur : **POLLARD, Jean
27, rue du Parc-à-Foulon
F-91120 Villebois-sur-Yvette (FR)**
Inventeur : **DUCHAMP, Robert
34 bis, boulevard de la Perruque
F-34000 Montpellier (FR)**
Inventeur : **TRUCHOT, Patrick
17, allée Paul-Cézanne
F-77420 Champs-sur-Marne (FR)**

(74) Mandataire : **Robert, Jean-Pierre et al
CABINET BOETTCHER 23, rue la Boétie
F-75008 Paris (FR)**

## Description

Il existe un très grand besoin sur le marché aujourd'hui de dispositifs pour transformer une image, soit l'agrandir, soit la réduire, soit la numériser après l'avoir divisée en éléments, soit la restituer à partir de signaux électroniques associés par exemple à des cristaux liquides élémentaires. On citera, par exemple, le remplacement des tubes cathodiques, qui sont encombrants, peu déplaçables et consommateurs d'énergie, par des écrans plats, matriciels, qui sont encore onéreux et de taille réduite. La nécessité d'agrandir l'image est ici impérative car des circuits électroniques de commande de grandes dimensions sont d'un coût prohibitif.

Les dispositifs classiques d'optique par lentilles se prêtent mal à cet agrandissement, car ils introduisent des distorsions importantes entre l'objet et son image agrandie. En outre, certains écrans plats sont dits passifs c'est-à-dire qu'ils sont à cristaux liquides devant être éclairés pour être visibles. Il faut donc apporter de la lumière aux cristaux qui l'absorbent, lorsqu'ils ne sont pas excités ou la laisse passer (dans une gamme de longueur d'onde) lorsqu'ils sont excités. Dans cette application également les systèmes optiques traditionnels ne conviennent pas.

On a pensé utiliser des fibres optiques pour créer cet agrandissement (ou cette réduction) d'image en traitant la source (image objet) par pixels.

Le document US-A-4 331 380 et US-A-4 076 378 illustrent cette technique connue par laquelle une image est agrandie au moyen de fibres optiques divergentes avec ou sans variation de diamètre des conducteurs de lumière.

L'objet de l'invention réside dans un procédé pour réaliser de manière simple ce type de dispositif, et, en particulier un dispositif optique de transformation d'image qui est constitué par une pluralité de guides de lumière de diamètre individuel constant définissant chacun un élément d'image et s'étendant dans un corps les noyant, entre une première face d'extrémité dans laquelle l'une de leurs extrémités définit un arrangement géométrique régulier de pas déterminé et une seconde d'extrémité, dans laquelle l'autre de leurs extrémités définit un arrangement semblable audit premier arrangement d'un pas homothétique au pas susdit, lequel procédé consiste à :

– réaliser un faisceau de fibres de diamètre individuel égal à celui des guides de lumière, dans lequel les fibres sont maintenues régulièrement espacées les unes des autres selon un arrangement géométrique homothétique des arrangements susdits au niveau de deux platines de guidage et de fixation perpendiculaires aux fibres et distances l'une de l'autre d'une valeur déterminée,

– effectuer une torsion du faisceau autour de son axe par rotation relative des platines, d'une amplitude angulaire déterminée, les fibres étant, dans cette position de torsion, rendues entre les deux platines,

– maintenir cette torsion et fixer au moins une partie du faisceau dans cette configuration rendue au moyen d'une résine noyant lesdites fibres,

– et tronçonner, après solidification de la résine, le corps ainsi obtenu, perpendiculairement à son axe lontigudinal, selon deux plans parallèles dont les positions relatives et par rapport au corps sont déterminées pour que les faces de tronçonnage correspondent aux faces d'extrémité susdites.

On comprend que, lors de la rotation relative des platines, les fibres extérieures ne sont pas sollicitées de la même manière que celles situées au voisinage de l'axe de torsion. Aussi convient-il de ne rendre définitif le maintien du faisceau de fibres dans au moins une platine de fixation qu'après avoir procédé à la rotation susdite pour permettre le coulissement sous une certaine tension des fibres par rapport a ladite platine.

Dans une mise en oeuvre particulière du procédé selon l'invention, on réalise le faisceau par nappes successives, chaque nappe étant adjointe à la précédente au niveau de chaque platine de fixation lorsque ces dernières sont à décalage angulaire nul et chaque nappe est fixée aux platines après avoir décalé angulairement les platines entre elles. Pendant ce décalage les fibres ont glissé dans au moins une platine et ont atteint la longueur qu'elles auront dans le dispositif achevé.

On indiquera deux variantes du procédé selon l'invention, selon la nature des fibres employées.

Dans la première, les fibres susdites sont des fibres optiques qui constituent elles-mêmes, dans le corps susdit, les guides de lumière. Dans la seconde, après solidification du corps, les fibres calibrées mais non optiques, sont extraites du corps, les orifices ainsi constitués étant alors remplis par un matériau possédant les qualités optiques requises. Le tronçonnage s'opèrera soit avant, soit après le remplissage.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

– la figure 1 est un schéma en perspective d'un dispositif obtenu par le procédé de l'invention ;

– les figures 2 et 3 illustrent le principe du procédé de réalisation d'un dispositif identique à la figure 1 ;

– la figure 4 illustre avec la figure 5 une phase particulière du procédé selon l'invention.

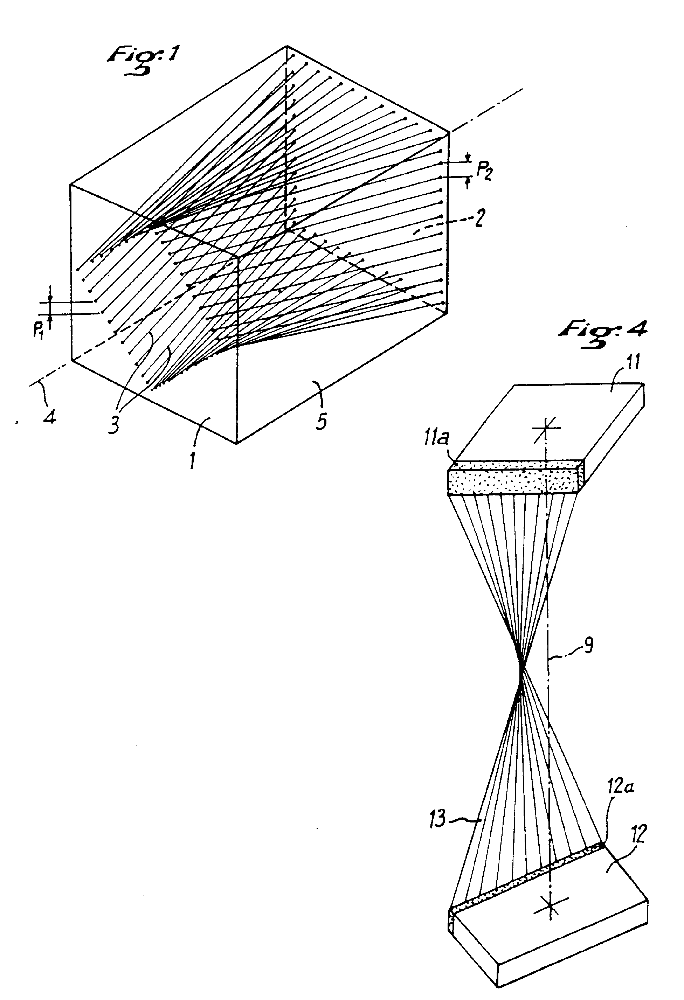

En se reportant à la figure 1 on voit un dispositif de transmission (avec réduction ou agrandissement) d'image entre deux plans 1 et 2, au moyen de guides de lumière 3 - par exemple des fibres optiques. Ce dispositif est tel que les images formées ou recueillies au niveau de l'un des plans sont, à une rotation près, autour de l'axe 4 de symétrie de l'appareil, homothétiques. Pour obtenir ces résultats, on aura arrangé les guides de lumière en faisceau depuis une première face 1 où leurs extrémités sont disposées régulièrement espacées les unes des autres d'un pas $p_1$, aux sommets d'une maille qui peut être carrée, triangulaire, ou d'une manière générale polygonale jusqu'à une seconde face 2 où leurs extrémités sont disposées dans une même configuration, mais de pas $p_2$. On notera que sur la figure, seules les fibres extérieures du faisceau - et seulement certaines d'entre elles -, ont été représentées.

A titre d'exemple, un dispositif conforme à la figure 1 pourra comporter 4096 extrémités de guides de lumière dont chacune définit un pixel ou point d'échantillonnage d'une image présente au plan 1, de diamètre 76 micromètres répartis selon une matrice carrée au pas de 100 micromètres de côté. Dans le plan 2, l'image comportera, bien entendu, le même nombre de points de définition de même diamètre que ceux du plan 1, mais répartis selon une matrice carrée au pas de 320 micromètres. Le rapport d'homothétie sera donc de 3,2.

Les guides de lumière 3 sont enfermés dans un corps 5, par exemple une résine, comme on le verra en regard du procédé de fabrication décrit ci-après, ou sont constituées par des canaux réalisés dans ce corps et remplis d'un matériau possédant les qualités optiques requises.

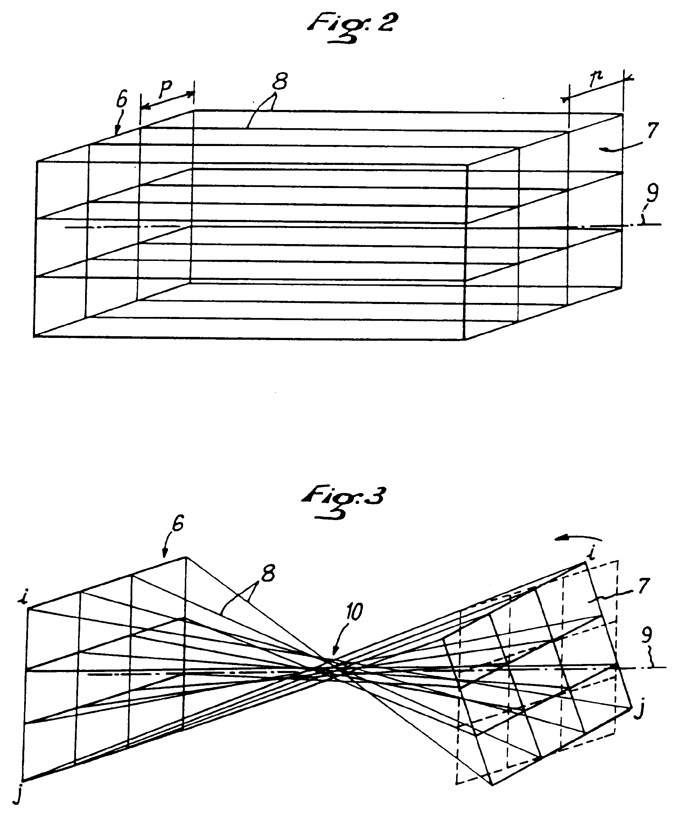

Les figures 2 et 3 montrent par des schémas un procédé de fabrication d'un tel dispositif. Sur la figure 2 on a schématisé deux platines 6 et 7 parallèles l'une à l'autre et perpendiculaires à l'axe 9 d'un faisceau de fibres 8 (ici ne comportant que 16 fibres). Les fibres sont fixées aux platines aux sommets d'une matrice carrée d'un certain pas p. En faisant tourner l'une des platines 7 par rapport à l'autre 6, comme le montre la figure 3, et dans la mesure où les fibres du faisceau peuvent soit s'allonger suffisamment, soit glisser dans l'une des platines pour encaisser les allongements qu'elles subissent, - en dehors des fibres du centre - lors de cette rotation, on constate et on démontre mathématiquement que chaque section du faisceau ainsi déformé est homothétique de la section d'implantation des fibres dans chaque platine. Bien entendu l'amplitude de la rotation, le diamètre des fibres et la distance entre les platines définissent le rapport maximum d'homothétie qu'il est possible d'obtenir. On comprendra que la plus petite section sera obtenue quand, au centre du faisceau, dans la zone 10, les fibres seront au contact les unes des autres.

Le procédé selon l'invention consiste donc, dans son principe, à obtenir une configuration de fibres comme représentée à la figure 3 et à la fixer en la noyant par exemple dans une résine. On peut ainsi obtenir deux dispositifs en tronçonnant de part et d'autre de la zone 10, un tronc de pyramide dont les faces sont parallèles et perpendiculaires à l'axe 9 du faisceau.

Les fibres en question peuvent être de plusieurs sortes. Il peut s'agir de fibres optiques monofilament, qui permettent la conduction de la lumière dans les deux sens. Il peut également s'agir de fibres multifilaments dont les uns sont spécialisés pour conduire la lumière dans un sens et les autres pour la conduire dans l'autre. Il peut s'agir enfin de fibres non optiques en carbone, en alliage métallique ou en matériau synthétique à haute résistance. Dans ce dernier cas, les fibres sont extraites du corps et remplacées par un matériau dont les qualités optiques conviennent à la conduction de la lumière.

La constitution du faisceau de fibres peut être réalisée de plusieurs manières. L'une d'elles est illutrée par la figure 4. Ce schéma montre en 11 et 12 les platines de maintien des fibres. Ces platines sont constituées par la juxtaposition de supports individuels, tels que 11a et 12a qui maintiennent les deux extrémités d'une nappe 13. Ces supports individuels peuvent être constitués par des barrettes rainurées et présentant un adhésif sur une face. Les fibres sont logées dans les rainures et maintenues dans celles-ci par l'adhésif qui autorise un certain coulissement de celles-ci. L'épaisseur de chaque support est calculée en fonction du pas désiré de la maille. Les supports sont ainsi juxtaposés les uns aux autres pour constituer les platines, successivement, chaque nappe mise en place subissant une torsion autour de l'axe 9 d'amplitude égale à celle qui sera finalement appliquée, engendrant avant fixation finale - par pression, notamment -, les allongements nécessaires de fibres permis par les glissements possibles dans les supports.

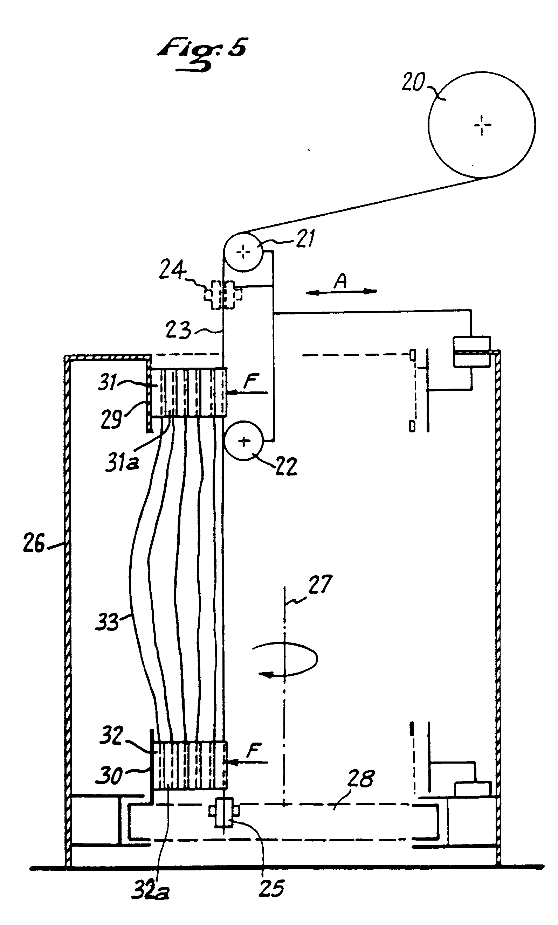

La figure 5 illustre schématiquement un appareillage pour mettre en oeuvre le procédé selon l'invention. Dans ce schéma, 20 représente un jeu de bobines d'alimentation des fibres. Les rouleaux 21 et 22 servent de renvoi et de guidage aux fibres issues des bobines 20 pour réaliser une nappe 23. Des préhenseurs 24 et 25 permettent le tirage de la nappe et sa tension si nécessaire. Les rouleaux 21,22, les préhenseurs 24 et 25 et la nappe 23 sont montés sur des chariots non représentés permettant leur déplacement dans le sens A par rapport à un bâti 26, transversalement à un axe 27 de rotation d'un plateau inférieur 28.

La première nappe est tirée au voisinage de deux butées 29 et 30, cette butée 30 étant portée par le plateau tournant 28. Un support individuel 31 et 32 est mis en place contre ces butées. La nappe est placée entre ces supports et d'autres adjacents 31a; 32a qui sont légèrement plaqués entre eux. La nappe est légèrement tendue entre les pinces 24 et 25 et le plateau 28 est tourné temporairement de l'amplitude de torsion désirée. La fixation haute et basse de la nappe devient définitive par application d'une forte pression suivant F sur des supports individuels adhésifs et le plateau revient à sa position initiale. La nappe prend la forme 33 dans laquelle les fibres sont détendues. La nappe est ensuite coupée et reformée entre d'autres supports élémentaires adjacents, pour y être fixée de la même manière. Les allongements sont de moins en moins accusés selon que la nappe s'approche de l'axe 27 (au moins pour les fibres centrales). Ainsi pour réaliser un dispositif ayant les caractéristiques de l'exemple ci-dessus, on disposera 64 nappes successivement juxtaposées, dont 32 seront d'un côté de l'axe 27 et 32 de l'autre, avec chacune leur préallongement.

La réalisation du dispositif consiste ensuite à faire tourner définitivement la plateau 28 de l'amplitude nécessaire puis à noyer le faisceau ainsi déformé dans une résine. On ne décrira pas en détail le moule permettant cet enrobage. Le corps étant durci, il suffit de le tronçonner le long de deux plans perpendiculaires à son axe longitudinal, les plans étant choisis pour obtenir les pas homothétiques déterminés sur les deux faces du dispositif. On voit que l'appareillage décrit permet d'extraire deux dispositifs du faisceau de fibres déformé.

Dans le cas où les fibres ne seraient pas optiques, on remplacera les fibres qui ont servi au surmoulage (à la manière de noyaux) par un matériau optique introduit dans les canaux ainsi libérés, soit à l'état fondu soit par enfilage de fibres optiques de diamètre convenable.

L'invention trouvera une application intèressante dans le domaine des appareils optiques ou de présentation et réalisation d'images.

## Revendications

1. Procédé de réalisation d'un dispositif optique de transformation d'images du type comprenant une pluralité (3) de guides de lumière de diamètre individuel constant définissant chacun un élément d'image et s'étendant dans un corps (5) les noyant, entre une première face d'extrémité dans laquelle l'une de leurs extrémités définit un arrangement géométrique régulier de pas ($p_1$) déterminé et une seconde face d'extrémité (2) dans laquelle l'autre de leurs extrémités définit un arrangement semblable audit premier arrangement d'un pas ($p_2$) homothétique au pas ($p_1$) susdit, ledit procédé étant caractérisé en ce qu'il consiste à :

— réaliser un faisceau (8) de fibres de diamètre individuel égal à celui des guides de lumière, dans lequel les fibres sont maintenues régulièrement espacées les unes des autres selon un arrangement géométrique homothétique des arrangements susdits au niveau de deux platines (6 et 7) de guidage et de fixation perpendiculaires aux fibres et distantes l'une de l'autre d'une valeur déterminée,

— effectuer une torsion du faisceau autour de son axe (9) par rotation relative des platines (6,7), d'une amplitude angulaire déterminée, les fibres étant dans cette position de torsion tendues entre les deux platines,

— maintenir cette torsion et fixer au moins une partie du faisceau dans cette configuration tendue au moyen d'une résine noyant lesdites fibres,

— et tronçonner, après solidification de la résine, le corps ainsi obtenu, perpendiculairement à son axe longitudinal, selon deux plans parallèles (1,2) dont les positions relatives et par rapport au corps sont déterminées pour que les faces de tronçonnage correspondent aux faces d'extrémité susdites.

2. Procédé selon la revendication 1 caractérisé en ce que le faisceau (8) est formé avant rotation de fibres parallèles tendues et en ce que le maintien du faisceau de fibres dans au moins une platine (12) de fixation n'est rendu définitif qu'après avoir procédé à la rotation susdite pour permettre le coulissement sous une certaine tension des fibres par rapport à ladite platine.

3. Procédé selon la revendication 1, caractérisé en ce que l'on réalise le faisceau par nappes (13) successives de fibres initialement tendues, chaque nappe (13) étant adjointe à la précédente au niveau de chaque platine (11, 12) de fixation lorsque ces dernières sont à décalage angulaire nul et chaque nappe (13) étant fixée définitivement aux platines (11, 12) après avoir décalé angulairement les platines entre elles.

4. Procédé selon l'une quelconque des revendications 1 à 3 caractérisé en ce que les fibres susdites sont des fibres optiques calibrées qui constituent des guides de lumière.

5. Procédé selon l'une quelconque des revendications 1 à 3 caractérisé en ce que les fibres susdites sont des fibres résistantes non optiques calibrées au diamètre des guides de lumière, que l'on extrait du corps moulé en résine après solidification, les orifices ainsi libérés étant ensuite remplis d'un matériau approprié à la réalisation de guides de lumière.

## Patentansprüche

1. Herstellungsverfahren eines optischen Bild neugestaltenden Systems, das durch eine Anzahl (3) von Lichtleitern mit konstantem Einzldurchmesser gebildet wird, die ein Bildelement definieren, sich in einem Körper (5) erstrecken, der sie zwischen einer ersten Endfläche (1) aufnimmt, in welcher das eine ihrer Enden eine regelmässige geometrische Anordnung mit gegebenem Anstand ($p_1$) bildet, und einer

zweiten Endfläche (2), in welcher das andere ihrer Enden eine der ersten Anordnung ähnliche Anordnung mit einem Abstand ($p_2$) bildet, der ähnlich liegend zum genannten Abstand ($p_1$) ist, dadurch gekennzeichnet, dass es umfasst :

– Herstellung eines Bündels (8) von Fasern mit einem Eizeldurchmesser, der gleich jenem der Lichtleiter ist, in denen die Fasern in einem regelmässigen Abstand voneinander in einer geometrischen Anordnung, die ähnlich liegend zu den genannten Anordnungen ist im Bereich von zwei Führungs - und Befestigungsplatinen (6, 7) gehalten werden, die senkrecht zu den Fasern liegen und voneinander einen Abstand gegebener Grösse haben,

– Bewirken einer Torsion des Bündels um seine Achse (9) durch eine Relativdrehung der Platinen (6, 7) um eine gegebene Winkelgrösse, wobei die in diese Torsionstellung zwischen der Platinen liegende Fasern gespannt sind,

– Aufrechterhaltung dieser Torsion und Befestigung mindestens eines Teils des Bündels in dieser gespannte Anordnung mittels eines Harzes, das die Fasern einhüllt,

– und Durchtrennen, nach Erstarrung des Harzes, des dabei erhaltenen Körpers senkrecht zu seiner Längsachse längs zweier paralleler Ebenen (1, 2), deren Relativlage zueinander und gegenüber dem Körper durch die Trennflächen bestimmt wird, die den genannten Endflächen entsprechen.

2. Verfahren nach Anspruch 1, dadurch gekennzeichnet, dass die Halterung des Bündels der Fasern in mindestens einer Befestigungsplatine (12) erst endgültig bewirkt wird, nachdem die genannte Drehung vorgenommen wurde, um ein Gleiten der Fasern gegenüber der Platine unter einer bestimmten Spannung zu gestatten.

3. Verfahren nach Anspruch 1, dadurch gekennzeichnet, dass man das Bündel mittels aufeinanderfolgender Flächen (13) herstellt, dass jede Fläche (13) an die vorausgehende, im Bereich jeder Befestigungsplatine (11, 12) hinzugefügt wird, während sich letztere in einer Winkelverstellung gleich Null befinden und jede Fläche (13) an den Platinen (11, 12) endgültig befestigt wird, nachdem die Platinen zwischen sich in ihrer Winkelbeziehung verstellt wurden.

4. Verfahren nach irgendeinem der Ansprüche 1 bis 3, dadurch gekennzeichnet, dass die Fasern kalibrierte, optische Fasern sind, die die Lichtleiter bilden.

5. Verfahren nach irgendeinem der Ansprüche 1 bis 3, dadurch gekennzeichnet, dass die Fasern non optische widerstandsfähige Fasern sind, die auf den Durchmesser des Lichtleiters kalibriert sind, den man vom Harzformkörper nach Erstarrung abzieht, und dass die auf diese Weise freigemachten Öffnungen anschliessend mit einem zur Herstellung der Lichtleiter geeigneten Werkstoff gefüllt werden.

**Claims**

1. Method of manufacturing an optical device for image transformation such as comprising a plurality of light guides (3) of individually constant diameter, each defining one image element, and extending in an embedding body (5) between a first end face (1), in which one end of each fiber defines a regular geometrical arrangement at a determined pitch ($p_1$) and a second end face (2) in which the other ends of the fibers define a geometrically similar arrangement to said first arrangement at a pitch ($p_2$) which is scaled relative to the above-mentioned pitch ($p_1$), said method being characterized in that it consists in :

– providing a bundle (8) of fibers individually of the same diameter as the light guides, with the fibers being held in the bundle regularly spaced relative to one another in a geometrical arrangement which is geometrically similar to the above- mentioned arrangments at two fixing and guide plates (6 and 7) extending perpendicularly to the fibers and spaced apart at a determined distance ;

– twisting the bundle about its axis (9) by rotating the plates (6, 7) relative to each other through a determined angular amplitude, the fibers heing, in that twisted position, streched between both the plates ;

– maintaining this twist and fixing at least a portion of the bundle in this streched configuration by means of a resin in which said fibers are embedded ; and

– after the resin has solidified, slicing the body obtained in this way perpendicularly to its longitudinal axis in two parallel planes (1, 2) whose positions relative to the body are determined in such a manner as to ensure that the slicing faces correspond to the above-mentioned end faces.

2. A method according to claim 1, characterized in that the bundle (8) of fibers is built up from parallel fibers before rotation and that the bundle is held in at least one of the fixing plates (12) in a manner which is not made final until after the above-mentioned rotation has been performed, thereby allowing fibers under a certain amount of tension to slide relative to said plate.

3. A method according to claim 1, characterized in that the bundle is built up from successive sheets (13) with each sheet (13) adjoining the preceding sheet at the level of each fixing plate (11, 12) when said plates are at zero angular offset, and each sheet (13) being definitely fixed to the plates (11, 12) after the plates have been angularly offset relative to each other.

4. A method according to any one of claims 1 to 3, characterized in that the above-mentioned fibers are calibrated optical fibers constituting the light guides.

5. A method according to any one of claims 1 to 3, characterized in that the above-mentioned fibers are calibrated strong non optical fibers having the same diameter as the light guides, said fibers being extracted from the molded resin body after it has solidified, with the orifices released in this way subsequently being filled with a material suitable for constituting the light guides.

Fig.1

Fig.4

Fig. 2

Fig. 3

Fig. 5